# EUROPEAN PATENT APPLICATION

(11) **EP 3 278 887 A1**
(43) Date of publication of application: **07.02.2018**
(21) Application number: 16772309.7
(22) Date of filing: 16.03.2016
(51) Int. Cl.: B21B 1/22, B21B 3/02, C21D 9/46, C22C 38/00, C22C 38/34, C22C 38/58, G11B 33/08, G11B 33/14

(54) **FERRITIC STAINLESS STEEL SHEET, COVER MEMBER, AND METHOD FOR PRODUCING FERRITIC STAINLESS STEEL SHEET**

(30) Priority: 03.04.2015 JP 2015076634
(71) Applicant: Nisshin Steel Co., Ltd., Chiyoda-ku, Tokyo 100-8366 (JP)
(72) Inventor: KAWAGOE Takafumi, Shunan-shi Yamaguchi 746-0023 (JP); KATSUKI Junichi, Shunan-shi Yamaguchi 746-0023 (JP)
(74) Representative: Ablett, Graham Keith
(86) International application number: PCT/JP2016/058375
(87) International publication number: WO 2016/158426

(57) **Abstract**

A ferritic stainless steel sheet with excellent cleanability, antiglare properties and hydrophilicity is provided.

In the ferritic stainless steel sheet, which is temper-rolled using a dull roll after finishing cold rolling and bright annealing, the arithmetic average roughness Ra in the direction perpendicular to the rolling direction on the steel sheet surface is 0.2 µm or more and 1.2 µm or less. In addition, the dull pattern transfer rate on the steel sheet surface is 15% or more and 70% or less. Furthermore, micropits with a depth of 0.5 µm or more and an open area of 10 µm² or more which are formed on the steel sheet surface have an existing density of 10.0 or less per 0.01 mm² and an open area ratio of 1.0% or less. In addition, a film formed on the steel sheet surface is constituted from an oxide containing SiO₂ as a main constituent, which oxide contains at least Si, N, Al, Mn, Cr, Fe, Nb, Ti and O as film-forming elements other than C, wherein the Si content is 10 at% or more, and the N content is 10 at% or less.

## Description

### TECHNICAL FIELD

The present invention relates to a ferritic stainless steel sheet which is temper-rolled using a dull roll after finishing cold rolling and bright annealing, a cover member and a production method for a ferritic stainless steel sheet.

### BACKGROUND ART

Austenitic stainless steel sheets typified by SUS304 and SUS316, and ferritic stainless steel sheets typified by SUS430 have been mostly used for building exterior materials, building interior materials, and kitchen utensils, etc.

Then, in such uses, not only cleanability has been required to easily remove various stains which are attached during producing products and construction, and various strains, fingerprints, etc. which are attached during daily use, but also antiglare properties are emphasized to make stains, fingerprints, handling scratches, etc. inconspicuous.

In addition, in members of precision instruments, electronic equipment and the like, for e.g. hard disk drives (HDDs), densification and processing acceleration have been generally required.

In addition, materials used for HDD parts such as a rotary member, an arm member, a case member and a cover member are strictly controlled about not only excellent corrosion resistance but also stains such as particles (extraneous particles) and outgas.

Then, in the cleaning process when producing HDD parts, careful cleaning is carried out, for example ultrasonic cleaning using a fluorine-based cleaning liquid, a weak alkaline cleaning liquid and ultrapure water and the like after degreasing with a hydrocarbon.

In the cleaning process, vapor cleaning is also carried out as needed, and finally the rinsing process is carried out several times using ultrapure water to remove not only particles but also ionic substances.

Furthermore, in the cleaning process, cleaning is generally carried out under clean circumstances with a cleanliness of Class 5 or higher prescribed by JIS B 9920 because fine dust existing in air is also a stain source. It should be noted that Class 5 or higher prescribed by JIS B 9920 means a circumstance in which the number of 0.1 µm particles is 100000 or less, the number of 0.2 µm particles is 23700 or less, the number of 0.3 µm particles is 10200 or less, the number of 0.5 µm particles is 3520 or less, the number of 1 µm particles is 832 or less and the number of 5 µm particles is 29 or less per m² of air.

For HDD parts produced through such cleaning process, normal steel, an aluminum alloy, and a stainless steel, etc. are used, and are mostly used with electroless Ni plating applied mainly for the purpose of elevating corrosion resistance and improving cleanability.

Herein, HDD parts etc. are required to have not only corrosion resistance and cleanability but also a matte surface with antiglare properties to make fingerprints and fine scratches inconspicuous.

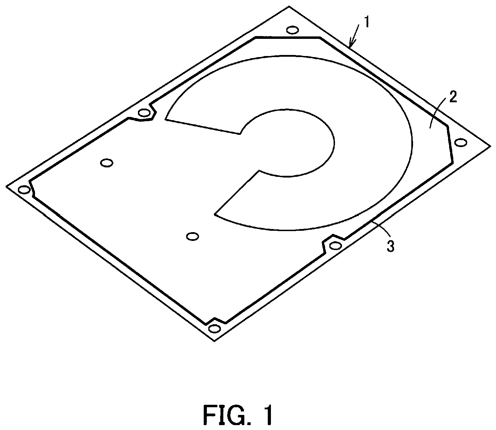

In addition, as shown in Fig. 1, HDDs are provided with a sealing member 3 such as a gasket or a rubber seal for a cover inner surface 2, which is the inner side of a cover member 1, and the inside of HDDs and the outside of HDDs are sealed for blockage with HDD parts assembled.

The sealing member 3 is fixed to a stainless steel constituting the cover member 1 with an adhesive, and thus the wettability of the adhesive and the stainless steel are important to maintain stable sealing properties. That is, it is required that the stainless steel constituting the cover member 1 of HDDs have hydrophilicity on the surface.

Then, as a stainless steel sheet for a cover member of precision instruments such as a HDD case, a stainless vibration damping steel sheet with excellent contamination resistance is known as described in PTL 1.

When a normal stainless steel sheet is annealed and pickled, a Cr depleted layer generated around the grain boundary near the surface by annealing is preferentially scarfed by pickling to form small grooves (microgrooves) along the grain boundary. When pickling is insufficient, the microgrooves become a factor to leave oil and to generate outgas. In addition, the microgrooves become a factor to reduce cleanability because dust is easily attached thereto.

In PTL 1, therefore, in order to prevent the occurrence of microgrooves, bright annealing or non-oxidation annealing is carried out as finishing annealing after cold rolling.

Then as a stainless steel sheet to which fine dust in air is not easily attached, a stainless steel sheet with 10 or less pinholes with a size of above 0.25 mm² per 10 cm² on a temper rolled sheet surface obtained by combining mechanical polishing, reduction annealing and temper rolling using a water-soluble lubricant is known as described in PTL 2.

Furthermore, as a stainless steel sheet with excellent stain resistance and corrosion resistance, a stainless steel sheet with elevated stain resistance and corrosion resistance obtained by controlling a steel sheet surface to a predetermined surface roughness by bright annealing after finishing rolling using a dull roll is known as described in PTL 3.

As a stainless steel sheet with excellent contamination resistance, cleanability and antiglare properties, a steel sheet surface is controlled to a predetermined arithmetic average roughness by first temper rolling using a mirror roll after finishing annealing and the second temper rolling using a dull roll to elevate contamination resistance, cleanability and antiglare properties as described in PTL 4.

### CITATION LIST

### Patent Literature

PTL 1: Japanese Patent Publication No. 3956346
PTL 2: Japanese Laid-open Patent Publication No. 2001-20045
PTL 3: Japanese Patent Publication No. 3587180
PTL 4: Japanese Patent Publication No. 4226131

### SUMMARY OF INVENTION

### Technical Problem

However, it is believed that good cleanability to stains such as minute particles is not obtained only by applying bright annealing or non-oxidation annealing as finishing annealing and omitting pickling as the stainless steel sheet in PTL 1 described above.

In addition, the cleanability of the stainless steel sheet in PTL 2 is evaluated by a test in which a sample after completion of an exposure test is only wiped once with a cloth immersed in a neutral detergent, and it is believed that good cleanability to stains such as minute particles is not obtained in the surface texture of the stainless steel sheet in PTL 2.

Herein, cleanability and antiglare properties are generally inconsistent, and as a stainless steel sheet has more excellent antiglare properties, unevenness is larger on a steel sheet surface. Accordingly, stains are easily attached and furthermore attached stains are not easily removed, and cleanability is deteriorated.

Therefore, in the stainless steel sheet in PTL 3, antiglare properties can be elevated, but cleanability is not investigated, and it is believed that good cleanability to stains such as minute particles is not obtained.

In addition, it is believed that only by providing surface roughness, antiglare properties can be elevated but good cleanability to stains such as minute particles is not obtained as the stainless steel sheet in PTL 4.

The present invention has been made in view of such points, and an object thereof is to provide a ferritic stainless steel sheet with excellent cleanability, antiglare properties and hydrophilicity, a cover member and a production method for a ferritic stainless steel sheet.

### Solution to Problem

The ferritic stainless steel sheet according to claim 1 is a ferritic stainless steel sheet, which is temper-rolled using a dull roll after finishing cold rolling and bright annealing, wherein the arithmetic average roughness Ra in the direction perpendicular to the rolling direction on the steel sheet surface is 0.2 µm or more and 1.2 µm or less, the transfer rate, which is the area rate of a part to which a dull pattern is transferred on the steel sheet surface, is 15% or more and 70% or less, micropits with a depth of 0.5 µm or more and an open area of 10 µm² or more which are formed on the steel sheet surface have an existing density of 10.0 or less per 0.01 mm² on the steel sheet surface and an open area ratio of 1.0% or less on the steel sheet surface, and a film formed on the steel sheet surface is constituted from an oxide containing SiO₂ as a main constituent, which oxide contains at least Si, N, Al, Mn, Cr, Fe, Nb, Ti and O as film-forming elements other than C, wherein the Si content is 10 at% or more, and the N content is 10 at% or less.

The ferritic stainless steel sheet according to claim 2 is the ferritic stainless steel sheet according to claim 1, which contains C: 0.15 mass% or less, Si: 0.1 mass% or more and 2.0 mass% or less, Cr: 10.0 mass% or more and 32.0 mass% or less, and at least one of Nb: 0.01 mass% or more and 0.8 mass% or less and Ti: 0.01 mass% or more and 0.5 mass% or less, and in which the rest includes Fe and inevitable impurities.

The ferritic stainless steel sheet according to claim 3 is the ferritic stainless steel sheet according to claim 2, which contains at least one of Mo: 0.2 mass% or more and 5.0 mass% or less and Cu: 0.1 mass% or more and 3.0 mass% or less.

The ferritic stainless steel sheet according to claim 4 is the ferritic stainless steel sheet according to claim 1, which contains C: 0.15 mass% or less, Si: 0.1 mass% or more and 2.0 mass% or less, Mn: 2.0 mass% or less, P: 0.04 mass% or less, S: 0.03 mass% or less, Ni: 0.6 mass% or less, Cr: 11.0 mass% or more and 32.0 mass% or less, Mo: 0 mass% or more and 3.0 mass% or less, Cu: 0 mass% or more and 1.0 mass% or less, Nb: 0 mass or more and 1.0 mass% or less, Ti: 0 mass% or more and 1.0 mass% or less, Al: 0 mass% or more and 0.12 mass% or less, N: 0.025 mass% or less, and B: 0 mass% or more and 0.01 mass% or less, and in which the rest includes Fe and inevitable impurities.

The cover member according to claim 5 is a cover member of hard disk drives, which is formed from a ferritic stainless steel sheet according to any one of claims 1 to 4.

The production method for a ferritic stainless steel sheet according to claim 6 is a production method for a ferritic stainless steel sheet, in which a hot rolled steel sheet after hot rolling is subjected to at least finishing cold rolling, followed by bright annealing as finishing annealing, and temper-rolled using a dull roll, wherein rolling is carried out at a cold rolling reduction of 30% or more in finishing cold rolling, and a rolling reduction of 15% or more and a rolling speed of 200 mm/min or less using a work roll with an arithmetic average roughness Ra of 0.3 µm or less at least in the final rolling pass, and the total cold rolling reduction until bright annealing is 70% or more.

The production method for a ferritic stainless steel sheet according to claim 7 is the production method for a ferritic stainless steel sheet according to claim 6, wherein in finishing annealing, bright annealing is carried out in a hydrogen-nitrogen mixed gas atmosphere with a hydrogen ratio of 70 vol% or more under the condition that the dew point is -70°C or higher and -50°C or lower and the temperature is 800°C or higher and 1100°C or lower.

The production method for a ferritic stainless steel sheet according to claim 8 is a production method for a ferritic stainless steel sheet according to claim 6 or 7, wherein in temper rolling, rolling is carried out in a single pass or more using a dull roll with a roll diameter of 500 mm or more and an arithmetic average roughness Ra of 1.0 µm or more and 3.5 µm or less at an elongation rate in a single pass of 0.5% or less, and the total elongation rate is 0.2% or more and 1.4% or less.

### Advantageous Effects of Invention

According to the present invention, because the existing density and open area ratio of micropits on a steel sheet surface are controlled, the arithmetic average roughness Ra on the steel sheet surface is controlled, and the dull pattern transfer rate on the steel sheet surface is controlled, cleanability and antiglare properties can be elevated, and because the composition of a surface film formed on the steel sheet surface is controlled, hydrophilicity can be elevated.

### BRIEF DESCRIPTION OF DRAWINGS

[Fig. 1]
Fig. 1 is a perspective view showing a cover member of HDD_{S}.

### DESCRIPTION OF EMBODIMENTS

The constitution in an embodiment of the present invention will now be described in detail.

The ferritic stainless steel sheet in this embodiment is one which is temper-rolled using a dull roll after finishing cold rolling and bright annealing, and is appropriate as a material for a cover member etc. of, for example, hard disk drives (HDDs).

This ferritic stainless steel sheet is subjected to finishing cold rolling to obtain a predetermined surface texture. The surface film structure is controlled to hydrophilicity by bright annealing after finishing cold rolling, and furthermore, temper rolling is carried out to obtain a predetermined surface texture. Thus, cleanability is not reduced to the extent possible and antiglare properties are elevated.

First, the surface texture of a ferritic stainless steel sheet will be described.

Cleanability showing the ease of removing stains attached onto a steel sheet surface is significantly affected by microscopic pits distributed on the steel sheet surface.

The pits are minute hollows on a steel sheet surface and mainly occur due to fractures in the hot rolling process, gaps in grain boundary oxidized parts, grain boundary corrosion parts, hollows generated in space between different kinds of grains such as inclusions and carbides, falling traces of these grains, hollows due to insertion of metal grains and other grains in the producing process, falling traces of remaining oxide scales, hollows due to entrainment of a rolling oil during cold rolling, fine surface scratches due to mismatches of cold rolling conditions, and working fractures due to inclusions during cold forming, and the like.

Among such pits, micropits with a depth of 0.5 µm or more and an open area of 10 µm² or more easily act as trap sites for foreign substances such as fine stains, and are a major factor to inhibit cleanability.

Therefore, it is important to control the distribution of micropits on a steel sheet surface to elevate cleanability.

It should be noted that crater-shaped hollows themselves with a size of several tens of µm to which a dull pattern is transferred by temper rolling with a dull roll do not correspond to micropits prescribed in this embodiment, and a dull pattern is transferred to a micropit portion which has existed before temper rolling with a dull roll and a pit which still remains in the inner part of a crater, and a pit which is newly opened in the inner part of a crater correspond thereto.

Then, when the existing density of micropits on a steel sheet surface is more than 10.0 per 0.01 mm², and when the open area ratio of micropits on the steel sheet surface is more than 1.0%, micropits easily act as trap sites and cleanability is reduced.

Therefore, in order that a ferritic stainless steel sheet can secure good cleanability in the cleaning process carried out under clean circumstances of Class 5 or higher prescribed in JIS B 9920, the existing density of micropits on the steel sheet surface is 10.0 or less per 0.01 mm² and the open area ratio of micropits on the steel sheet surface is 1.0% or less.

It should be noted that the depth of pits is determined as the largest depth of pits based on the average height of the pattern portion on the perimeter of pits. In addition, similarly, the depth of pits which exist in the inner part of a crater to which a dull pattern is transferred is also the largest depth of pits based on the average height of the pattern portion on the perimeter of pits.

The open area of a pit is the projected area of a part surrounded by the marginal portion of the pit with a steel sheet surface viewed in the direction of thickness from the plane.

These depth and open area of a pit are preferably measured using a laser microscope and a white-light interference microscope, which can measure a surface form.

In addition, the measurement region by such measuring means is preferably a total of 0.1 mm² or more in several visual fields randomly selected from a steel sheet surface, and the depth and open area of pits are measured, for example, by measurement in 20 visual fields or more with a magnification of 1000, and furthermore the existing density and open area ratio of micropits are calculated.

The number of micropits existing in a measurement region set in each visual field (including micropits in which a part of their openings is projected from the boundary of the measurement region) is measured, and the sum total of the measured numbers in each measurement region is divided by the total area of all the measurement regions to calculate the existing density of micropits as the number of micropits per 0.01 mm².

In addition, the total of the open area of each micropit existing in a measurement region set in each visual field (including, in a case where a part of the opening of a micropit is projected from the boundary of a measurement region, only the area of a part placed in the measurement region) is calculated, and the sum total of all the open areas in each measurement region is divided by the total area of each measurement region to calculate the open area ratio of micropits.

Herein, a matte surface such as a dull pattern is appropriate as a design for HDD members such as a cover member, and thus surface glossiness is reduced by temper rolling using a dull roll to provide antiglare properties. It is preferred that the standard of surface glossiness be glossiness prescribed by JIS Z 8741, i.e. the value at 20° is 400 or less.

As described above, when the arithmetic average roughness (Ra) of a steel sheet surface is less than 0.2 µm, a ferritic stainless steel sheet after temper rolling using a dull roll has high surface glossiness and a possibility that antiglare properties cannot be secured. On the other hand, when the unevenness of the steel sheet surface becomes greater and Ra is above 1.2 µm, there is a possibility that cleanability will be reduced. Therefore, in order to secure sufficient cleanability and antiglare properties, the Ra of a steel sheet surface is 0.2 µm or more and 1.2 µm or less.

The arithmetic average roughness (Ra) is a measurement value prescribed by JIS B 0601, i.e. a measurement value in the direction perpendicular to the rolling direction.

The transfer rate, which is the area rate of a part to which a dull pattern is transferred by temper rolling on a steel sheet surface, is the proportion of projected area of a part surrounded by the pattern portion of a crater portion to which a dull pattern is transferred in the total area of the steel sheet surface with the steel sheet surface viewed in the direction of thickness from the plane. For example, 20 visual fields or more are observed with a magnification of 400 by an optical microscope and the like, and a dull pattern transfer rate can be calculated by measuring the area rate of a crater portion to which a dull pattern is transferred.

Herein, cleanability and antiglare properties are generally inconsistent, and as the transfer rate on a steel sheet surface is lower, cleanability can be elevated; however, the surface glossiness becomes higher and antiglare properties are reduced. On the other hand, as the transfer rate is higher, the surface glossiness becomes lower and antiglare properties can be elevated; however, unevenness on the steel sheet surface becomes greater and cleanability is reduced.

More particularly, when the transfer rate is less than 15%, cleanability can be elevated; however, antiglare properties are reduced, and stains, fingerprints and handling scratches are easily visible. On the other hand, when the transfer rate is above 70%, antiglare properties can be elevated; however, the micropits occurrence in the inner part of a crater to which a dull pattern is transferred increases, and the opening of a micropit become greater, which causes a significant reduction in cleanability.

Therefore, in order to secure both cleanability and antiglare properties, the transfer rate on a steel sheet surface is 15% or more and 70% or less.

In order to provide hydrophilicity for a ferritic stainless steel sheet, it is required that a surface film have a composition containing silicon oxide (SiO₂) as a main constituent, and as the amount of SiO₂ in the surface film after bright annealing is larger, hydrophilicity can be elevated.

In addition, even when a surface film formed on a steel sheet surface is an oxidized film containing SiO₂ as a main constituent, the silicon (Si) content and the nitrogen (N) content in the oxidized film are important to elevate hydrophilicity. That is, when an oxidized film contains, for example, Si, nitrogen, aluminum (Al), manganese (Mn), chromium (Cr), iron (Fe), niobium (Nb), titanium (Ti) and oxygen (O) as film-forming elements other than carbon (C), the Si content and N content in the oxidized film are important.

More particularly, when the Si content in an oxidized film is less than 10 at%, an oxidized film with a composition containing Cr and Fe oxides as main constituents is produced, and hydrophilicity is not obtained. Therefore, the Si content in an oxidized film formed on a steel sheet surface is 10 at% or more. In addition, the Si content in an oxidized film is more preferably 15 at% or more.

In addition, it has been verified that when the N content in an oxidized film is above 10 at%, hydrophilicity cannot be obtained. Therefore, the N content in an oxidized film formed on a steel sheet surface is 10 at% or less.

It should be noted that the analysis value of surface film composition is a value calculated from a semi-quantitative analysis value based on the integral area of each element spectrum by X-ray photoelectron spectroscopy.

The component composition of a ferritic stainless steel sheet will now be described.

The above ferritic stainless steel sheet contains 0.15 mass% or less of C, 0.1 mass% or more and 2.0 mass% or less of Si, 10.0 mass% or more and 32.0 mass% or less of Cr, and at least one of 0.01 mass% or more and 0.8 mass% or less of Nb, and 0.01 mass% or more and 0.5 mass% or less of Ti, and the rest includes Fe and inevitable impurities.

In addition, a ferritic stainless steel sheet may have a composition containing at least one of 0.2 mass% or more and 5.0 mass% or less of molybdenum (Mo) and 0.1 mass% or more and 3.0 mass% or less of copper (Cu) as needed.

C is a solid solution strengthening element, and when the C concentration is high, Cr carbides precipitated on the grain boundary increase. A Cr depleted layer with a lower Cr concentration is generated around Cr carbides, and starting from this part, micropits easily occur. In addition, micropits are opened and newly occur during temper rolling using a dull roll, which causes the deterioration of cleanability. Then, when the C content is above 0.15%, cleanability is easily deteriorated due to the Cr depleted layer. Therefore, the C content is 0.15 mass% or less.

Si is an alloy component which affects the amount of SiO₂ in a surface film after bright annealing. That is, in order to provide hydrophilicity for a ferritic stainless steel sheet as described above, it is preferred to increase the amount of SiO₂ in a surface film after bright annealing, but when the Si content in a ferritic stainless steel sheet, a raw sheet, is small, the proportion of Si in the surface film becomes lower, and an oxidized film containing SiO₂ as a main constituent is not easily formed. Therefore, a higher Si content in steel of a raw sheet is more preferred. More particularly, when the Si content is less than 0.1 mass%, there is a possibility that hydrophilicity cannot be sufficiently secured. On the other hand, when the Si content is above 2.0 mass%, there is a possibility that cold workability will be reduced. Therefore, the Si content is 0.1 mass% or more and 2.0 mass% or less.

Cr is an alloy component effective to improve corrosion resistance, and when the Cr content is 10.0 mass% or more, the effect of improving corrosion resistance by adding Cr becomes remarkable. On the other hand, when Cr is contained in a large amount, above 32.0 mass%, there is a possibility that manufacturability will be deteriorated. Therefore, the Cr content is 10.0 mass% or more and 32.0 mass% or less.

Nb coheres to C and N in steel as Nb(C, N) to generate precipitates, and suppresses the generation of Cr carbides, which is one of the causes of the micropits occurrence, and thus is an important alloy component to elevate cleanability. Then, such effect becomes remarkable by adding Nb in an amount of 0.01 mass% or more. On the other hand, when Nb is contained excessively, above 0.8 mass%, there is a possibility that manufacturability and workability will be deteriorated. Therefore, when Nb is contained, the Nb content is 0.01 mass% or more and 0.8 mass% or less.

Similarly to Nb, Ti coheres to C and N in steel as Ti(C, N) to generate precipitates, and suppresses the generation of Cr carbides, which is one of the causes of the micropits occurrence, and thus is an important alloy component to elevate cleanability. Then, such effect becomes remarkable by adding Ti in an amount of 0.01 mass% or more. On the other hand, when Ti is contained excessively, above 0.5 mass%, there is a possibility that manufacturability and workability will be deteriorated. Therefore, when Ti is contained, the Ti content is 0.01 mass% or more and 0.5 mass% or less.

Mo and Cu are added as needed for the purpose of improving corrosion resistance. When Mo is contained, the effect of elevating corrosion resistance is shown by adding 0.2 mass% or more; however when Mo is contained excessively, above 5.0 mass%, there is a possibility that toughness will be reduced. In addition, when Cu is contained, the effect of elevating corrosion resistance is shown by adding 0.1 mass% or more; however, when Cu is contained excessively, above 3.0 mass%, there is a possibility that toughness will be reduced. Therefore, when Mo is contained, the Mo content is 0.2 mass% or more and 5.0 mass% or less, and when Cu is contained, the Cu content is 0.1 mass% or more and 3.0 mass% or less.

In addition to the above alloy components, other alloy components can be also added as needed. For example, at least one of 2.0 mass% or more of manganese (Mn), 0.01 mass% or more and 0.5 mass% or less of zirconium (Zr), 0.05 mass% or less of yttrium (Y), 1.0 mass% or less of tungsten (W), 0.5 mass% or less of tin (Sn) and 1.0 mass% or less of cobalt (Co) and the like can be added to elevate corrosion resistance, workability and the like.

Furthermore, when considering a bad influence on characteristics by the above alloy components, the phosphorus (P) content as impurities is preferably controlled to 0.05 mass% or less, and the sulfur (S) content is preferably controlled to 0.01 mass% or less.

It should be noted that the ferritic stainless steel sheet is not limited to the above compositions, and may have compositions corresponding to the types of ferritic stainless steel prescribed by e.g. JIS G 4305: 2005 and JIS G 4303: 2005. In addition to these compositions of ferritic stainless steel sheet, the ferritic stainless steel may contain 0.15 mass% or less of C, 0.1 mass% or more and 2 mass% or more of Si, 2.0 mass% or less of Mn, 0.04 mass% or less of P, 0.03 mass% or less of S, 0.6 mass% or less of Ni, 11.0 mass% or more and 32.0 mass% or less of Cr, 0 mass% or more and 3.0 mass% or less of Mo (including no addition), 0 mass% or more and 1.0 mass% or less of Cu (including no addition), 0 mass or more and 1.0 mass% or less of Nb (including no addition), 0 mass% or more and 1.0 mass% or less of Ti (including no addition), 0 mass% or more and 0.12 mass% or less of Al (including no addition), 0.025 mass% or less of N (including no addition), and 0 mass% or more and 0.01 mass% or less of boron (B (including no addition)), and the rest of the ferritic stainless steel sheet may include Fe and inevitable impurities.

A production method for the above ferritic stainless steel sheet will now be described.

In order to produce a ferritic stainless steel sheet with excellent cleanability and antiglare properties, it is important that annealing, pickling, finishing cold rolling and bright annealing are successively carried out to produce a ferritic stainless steel raw sheet with a few micropits, smoothness and excellent cleanability, and this raw sheet is temper-rolled using a dull roll under a light pressure to provide antiglare properties with cleanability maintained as much as possible.

First, using a hot rolled steel sheet produced by a conventional method as a starting material, relatively coarse extraneous substances such as metal and scales are removed, in the annealing and pickling processes and the like.

Next, rolling is carried out at a sufficient rolling reduction in finishing cold rolling, and in the final stage (final pass) of the finishing cold rolling, rolling is carried out using a work roll with high smoothness at a low velocity under the condition of high pressure to smooth hollows (falling traces) generated by pickling and hollows by grain boundary corrosion to the extent possible. Simultaneously, hollows derived from a hot rolled steel sheet and hollows such as falling traces in the annealing and pickling processes are smoothened to the extent possible by significantly increasing the total cold rolling reduction until bright annealing.

Furthermore, the formation of hollows due to surface oxidation is prevented by carrying out bright annealing as finishing annealing after finishing cold rolling, and besides the subsequent pickling is not required, which does not cause grain boundary corrosion by pickling, and a ferritic stainless steel raw sheet with excellent cleanability is produced.

Then, in order to control a ferritic stainless steel raw sheet thus produced to the above existing density and open area ratio of micropits, temper-rolling is carried out using a dull roll on a predetermined condition that the opening and occurrence of micropits can be suppressed to provide antiglare properties with cleanability maintained.

It should be noted that, when producing a ferritic stainless steel sheet, a method in which using a hot rolled steel sheet as a starting material, bright annealing is carried out as finishing annealing at least after finishing cold rolling, followed by temper rolling using a dull roll is only needed. As a specific producing procedure, for example, a ferritic stainless steel sheet can be produced from a hot rolled steel sheet by a procedure (i) in which processing is allowed to proceed in order of annealing, pickling, finishing cold rolling, finishing annealing (bright annealing) and temper rolling. In addition, as another procedure, a procedure (ii) in which processing is allowed to proceed from a hot rolled steel sheet in order of annealing, pickling, cold rolling, annealing, pickling, finishing cold rolling, finishing annealing (bright annealing) and temper rolling can be used. Furthermore, a procedure (iii) in which processing is allowed to proceed from a hot rolled steel sheet in order of annealing, pickling, first cold rolling, first annealing, first pickling, second cold rolling, second annealing, second pickling, finishing cold rolling, finishing annealing (bright annealing) and temper rolling can be used. In addition, a procedure (iv) in which processing is allowed to proceed from a hot rolled steel sheet in order of annealing, pickling, cold rolling, bright annealing, finishing cold rolling, finishing annealing (bright annealing) and temper rolling can be used.

It should be noted that in the above procedures (i) to (iv), the grinding process and the degreasing process can be added as needed, and the finishing processes such as degreasing, a tension leveler and slitting can be applied to a sheet after the final temper rolling without affecting a surface texture.

Specific conditions in each process in the above production method will be described.

A hot rolled steel sheet is a steel sheet which is only hot-rolled without cold rolling. This hot rolled steel sheet is one in which a stainless steel is smelted, casted and hot rolled by a conventional method, and subjected to hot rolling, annealing and pickling as needed.

Annealing and pickling are processing effective to remove coarse foreign substances such as metal and scales which are attached to a steel sheet surface.

The annealing conditions can be suitably selected considering the manufacturability and characteristics of raw materials. In addition, either annealing method, batch-type annealing and continuous annealing, can be used without affecting the surface texture of a steel sheet, and can be selected, for example, depending on its raw materials.

Pickling is carried out by combining neutral salts and acids such as sulfuric acid, nitric acid, hydrofluoric acid and hydrochloric acid, and electrolytic pickling can be also carried out.

Finishing cold rolling is cold rolling carried out immediately before bright annealing after the final annealing, and the number of passes may be once or several times. In addition, several kinds of rolling machine such as general Sendzimir mill and a mill for thin sheets can be used in order. The cold rolling reduction of finishing cold rolling when using different rolling machines in order is the total cold rolling reduction of several rolling machines.

Such finishing cold rolling is an important process to determine the surface texture of a ferritic stainless steel sheet. That is, in order that micropits will have predetermined existing density and open area ratio in finishing cold rolling, it is important to fully draw falling traces of foreign substances generated by pickling and hollows by grain boundary corrosion in finishing cold rolling.

Then, when the cold rolling reduction in finishing rolling is less than 30%, there is a possibility that hollows cannot be fully drawn. Therefore, the cold rolling reduction in finishing cold rolling is 30% or more. It should be noted that the cold rolling reduction is preferably 40% or more and further preferably 50% or more. In addition, the cold rolling reduction in finishing cold rolling is affected by material deformation resistance and the ability of a cold rolling machine used, and thus the upper limit thereof can be suitably selected and is commonly 90% or less.

In addition, in finishing cold rolling, when a work roll with a roll surface arithmetic average roughness Ra of above 0.3 µm is used at least in the final rolling pass, and when the rolling reduction in the final rolling pass is less than 15%, there is a possibility that the smoothing of a steel sheet surface will be insufficient and cleanability will be reduced. Therefore, it is required to use a work roll with a roll surface arithmetic average roughness Ra of 0.3 µm or less at least in the final rolling pass in finishing cold rolling, and furthermore it is required that the rolling reduction in this final rolling pass be 15% or more.

Furthermore, when the rolling speed in the final rolling pass is above 200 m/min, there is a possibility that the opening and occurrence of micropits will proceed by the entrainment of a rolling oil into a work roll and a steel sheet surface. Therefore, the rolling speed in the final rolling pass in finishing cold rolling is 200 m/min or less.

Herein, many surface defects generated during hot rolling are relatively deep. In order to reduce micropits as many as possible, it is important to increase the total cold rolling reduction until the bright annealing process and fully draw surface defects existing in a hot rolled steel sheet, a starting material. There is also a possibility that foreign substances buried around a steel sheet surface will fall by annealing, pickling of a hot rolled sheet and the like before cold rolling, and in order to draw the falling traces, it is effective to increase the total cold rolling reduction.

The total cold rolling reduction is the total rolling reduction of cold rolling in a series of processes until bright annealing when producing a ferritic stainless steel sheet. For example, in the above procedure (i), it means the rolling reduction of finishing cold rolling, in the above procedure (ii), it means the total rolling reduction of cold rolling and finishing cold rolling, in the above procedure (iii), it means the total rolling reduction of cold rolling 1, cold rolling 2 and finishing cold rolling, and in the above procedure (iv), it means the total rolling reduction of cold rolling and finishing cold rolling. More particularly, when the sheet thickness before the first cold rolling pass of a hot rolled steel sheet is h0 (mm) and the sheet thickness after the final cold rolling pass is h1 (mm), the total cold rolling reduction is represented by ((h0-h1)/h0)*100 (%).

Then, as a result of investigation, it has been found that, when the total cold rolling reduction, which is the total cold rolling reduction until bright annealing, is 70% or more, surface defects can be effectively removed. Therefore, the total cold rolling reduction until bright annealing is 70% or more. It should be noted that the total cold rolling reduction is affected by material deformation resistance and the ability of a cold rolling machine used, and thus the upper limit thereof can be suitably selected and is commonly 98% or less.

In order to maintain a surface texture obtained by such finishing cold rolling, i.e. a surface texture with a very few micropits, it is important that surface oxidation is prevented in finishing annealing and furthermore the subsequent processes for removing oxide scales such as pickling and grinding can be omitted. Therefore, bright annealing is carried out as finishing annealing in a reducing atmosphere.

Bright annealing is annealing in a reducing atmosphere, and is preferably carried out on the condition of bright annealing processing applied to the BA finish (JIS G 203: 2009, No. 4225).

In addition, in order to obtain an oxidized film structure with excellent hydrophilicity in bright annealing, it is required to form an oxidized film containing SiO₂ as a main constituent by annealing in a hydrogen and nitrogen mixed gas atmosphere with a hydrogen ratio of 70 vol% or more.

Then, when the dew point is above -50°C during annealing, an oxidized film becomes an oxide containing Cr and Fe as main constituents, and furthermore the oxidized film becomes too thick, which easily cause coloration due to interference color (temper color). On the other hand, when the dew point is lower than -70°C, Si is easily reduced, and thus an oxidized film containing SiO₂ as a main constituent is not easily formed, and furthermore Al is easily thickened in the film. In addition, when temperature during annealing is lower than 800°C and above 1100°C, Si is not sufficiently thickened in an oxidized film, and an oxidized film containing SiO₂ as a main constituent is not easily formed. Therefore, bright annealing is carried out in a hydrogen-nitrogen mixed gas atmosphere with a hydrogen ratio of 70 vol% or more under the condition that the dew point is -70°C or higher and -50°C or lower and the temperature is 800°C or higher and 1100°C or lower.

A dull pattern is transferred to a steel sheet surface by temper rolling using a dull roll as a work roll after bright annealing to provide antiglare properties with cleanability maintained.

In such temper rolling, in order to suppress the opening and occurrence of micropits in the inner part of a crater to which a dull pattern is transferred, and provide antiglare properties without deterioration of cleanability, it is important to control the dull rolling condition.

Then, when the diameter of a dull roll is smaller than 500 mm, there is a possibility that stress will be applied to a crater portion to which a dull pattern is transferred more than necessary to develop the opening and occurrence of micropits in the inner part of a crater.

In addition, when the surface roughness of a dull roll has an arithmetic average roughness Ra of 1.0 µm or more and 3.5 µm or less, antiglare properties can be provided and cleanability is not easily reduced.

With respect to the pass condition of temper rolling, when the elongation rate per pass is above 0.5%, there is a possibility that the opening and occurrence of micropits in the inner part of a crater will proceed. In addition, even when the total elongation rate is identical, temper rolling in more passes by a plurality of passes is preferred because the opening and occurrence of micropits in the inner part of a crater to which a dull pattern is transferred can be suppressed.

Furthermore, when the total elongation rate, which is the total elongation rate in temper rolling, is less than 0.2%, there is a possibility that antiglare properties cannot be sufficiently provided, and when the total elongation rate is above 1.4%, there is a possibility that cleanability will be reduced.

Therefore, in temper rolling, it is preferred that the diameter of a dull roll be 500 mm or more, the surface roughness of this dull roll have an arithmetic average roughness Ra of 1.0 µm or more and 3.5 µm or less, the elongation rate in a single pass be 0.5% or less, and the total elongation rate be 0.2% or more and 1.4% or less.

In such temper rolling, a lubricant blended with e.g. additives for the purpose of e.g. rust prevention can be used. In addition, a work roll surface can be wiped with e.g. a wiper using a cleaning solution to remove foreign substances.

The action and effect of the above embodiment will now be described.

According to the above ferritic stainless steel sheet, the existing density of micropits which are the cause of attachment of stains to a steel sheet surface is 10.0 or less per 0.01 mm², and the open area ratio on a steel sheet surface is 1.0% or less, and thus the trap sites of e.g. particles are not easily generated, and cleanability can be elevated.

In addition, the arithmetic average roughness Ra on a steel sheet surface is 0.2 µm or more and 1.2 µm or less, and furthermore the dull pattern transfer rate on a steel sheet surface is 15% or more and 70% or less, and thus cleanability can be maintained, and furthermore antiglare properties can be elevated.

Furthermore, a surface film formed on a steel sheet surface is constituted from an oxide containing SiO₂ as a main constituent which oxide has a composition containing Si, N, Al, Mn, Cr, Fe, Nb, Ti and O as film-forming elements other than C, wherein the Si content is 10 at% or more and the Ni content is 10 at% or less, and thus hydrophilicity can be elevated.

Therefore, the surface texture and surface film on a ferritic stainless steel sheet are controlled as described above, and thus cleanability, antiglare properties and hydrophilicity can be elevated.

In addition, a ferritic stainless steel sheet has excellent cleanability, antiglare properties and hydrophilicity, and thus can be appropriately used as a cover member of HDD_{S}.

According to the above production method for a ferritic stainless steel sheet, rolling is carried out at a cold rolling reduction of 30% or more in finishing cold rolling and a rolling speed of 200 mm/min or less so that the rolling reduction will be 15% or more using a work roll with an arithmetic average roughness Ra of 0.3 µm or less at least in the final rolling pass in finishing cold rolling, and thus the micropits occurrence can be suppressed, and cleanability can be elevated by smoothening a steel sheet surface.

Furthermore, the total cold rolling reduction until bright annealing is 70% or more, and thus surface defects are effectively removed, the micropits occurrence can be suppressed and cleanability can be elevated.

By bright annealing after finishing cold rolling in a hydrogen-nitrogen mixed gas atmosphere with a hydrogen ratio of 70 vol% or more under the condition that the dew point is -70°C or higher and -50°C or lower and the temperature is 800°C or higher and 1100°C or lower, an oxidized film containing SiO₂ as a main constituent is formed as a surface film on a steel sheet surface and thus hydrophilicity can be elevated.

By temper rolling after bright annealing using a dull roll with a diameter of 500 mm or more and an arithmetic average roughness Ra of 1.0 µm or more and 3.5µm or less at an elongation rate in a single pass of 0.5% or less so that the total elongation rate is 0.2% or more and 1.4% or less, cleanability is not reduced to the extent possible and antiglare properties can be elevated.

### Examples

Examples and Comparative Examples will now be described.

### [Example 1]

First, a stainless steel with a chemical composition shown in Table 1 was smelted by an electric furnace, a converter and the VOD process, followed by continuous casting to obtain a slab.

**[Table 1]**

| Category | Steel type | Alloy component content (mass%) | | | | | | |
|---|---|---|---|---|---|---|---|---|
| | | C | Si | Mn | Cr | Ti | Nb | Others |
| Examples | A | 0.07 | 0.57 | 0.14 | 16.3 | 0.02 | <0.01 | |
| | B | 0.01 | 0.45 | 0.15 | 17.2 | <0.01 | 0.34 | |
| | C | 0.01 | 0.56 | 0.14 | 18.2 | <0.01 | 0.41 | Cu: 0.5 |
| Comparative Examples | D | 0.16 | 0.52 | 0.14 | 16.4 | 0.01 | <0.01 | |
| | E | 0.01 | 0.05 | 0.20 | 16.3 | <0.01 | 0.20 | |
| | F | 0.07 | 0.48 | 0.13 | 16.5 | <0.01 | <0.01 | |

Next, a continuous casting slab was hot-rolled by a common method to obtain a hot rolled steel sheet. In addition, using the hot rolled steel sheet as a starting material, each process was allowed to proceed in the order mentioned in the above procedure (ii) or procedure (iii), and furthermore a dull roll was used in the temper rolling process to obtain a temper rolled material with a sheet thickness of 0.3 to 1.5 mm, which was used as a test piece in each Example and each Comparative Example. The production condition of each of these Examples and Comparative Examples will be described in Table 2.

It should be noted that, in the steel type B and the steel type E in Table 2, each process was carried out by the procedure (ii), and in the other steel types, each process was carried out by the procedure (iii). In addition, all Examples used a work roll with a Ra of 0.3 µm or less in finishing cold rolling, the rolling reduction in the final rolling pass was 15% or more, and the rolling speed in the final rolling pass was 200 mm/min or less. In all Examples, furthermore, bright annealing was carried out in an atmosphere in which hydrogen is 75 to 100 mass% and the rest is nitrogen.

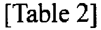

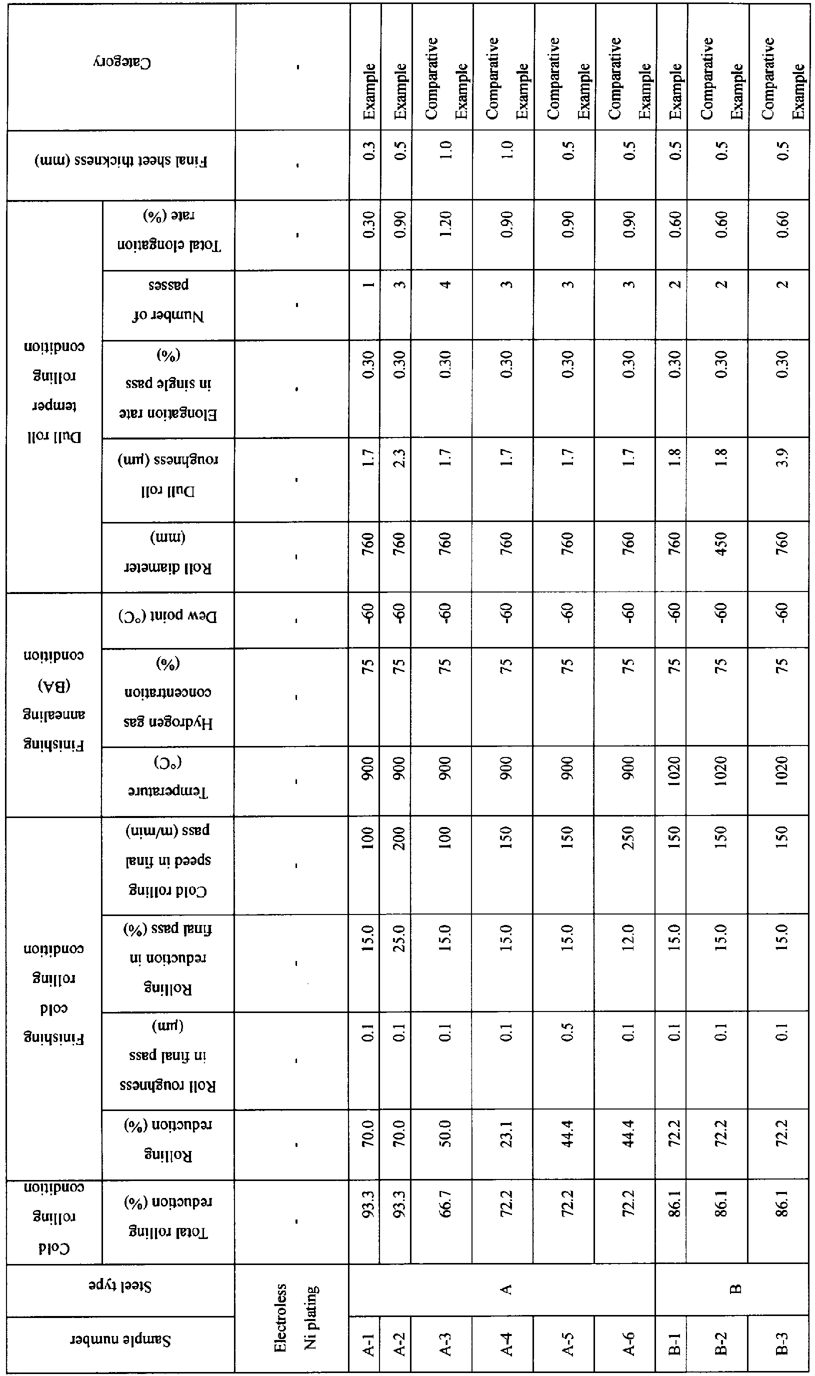

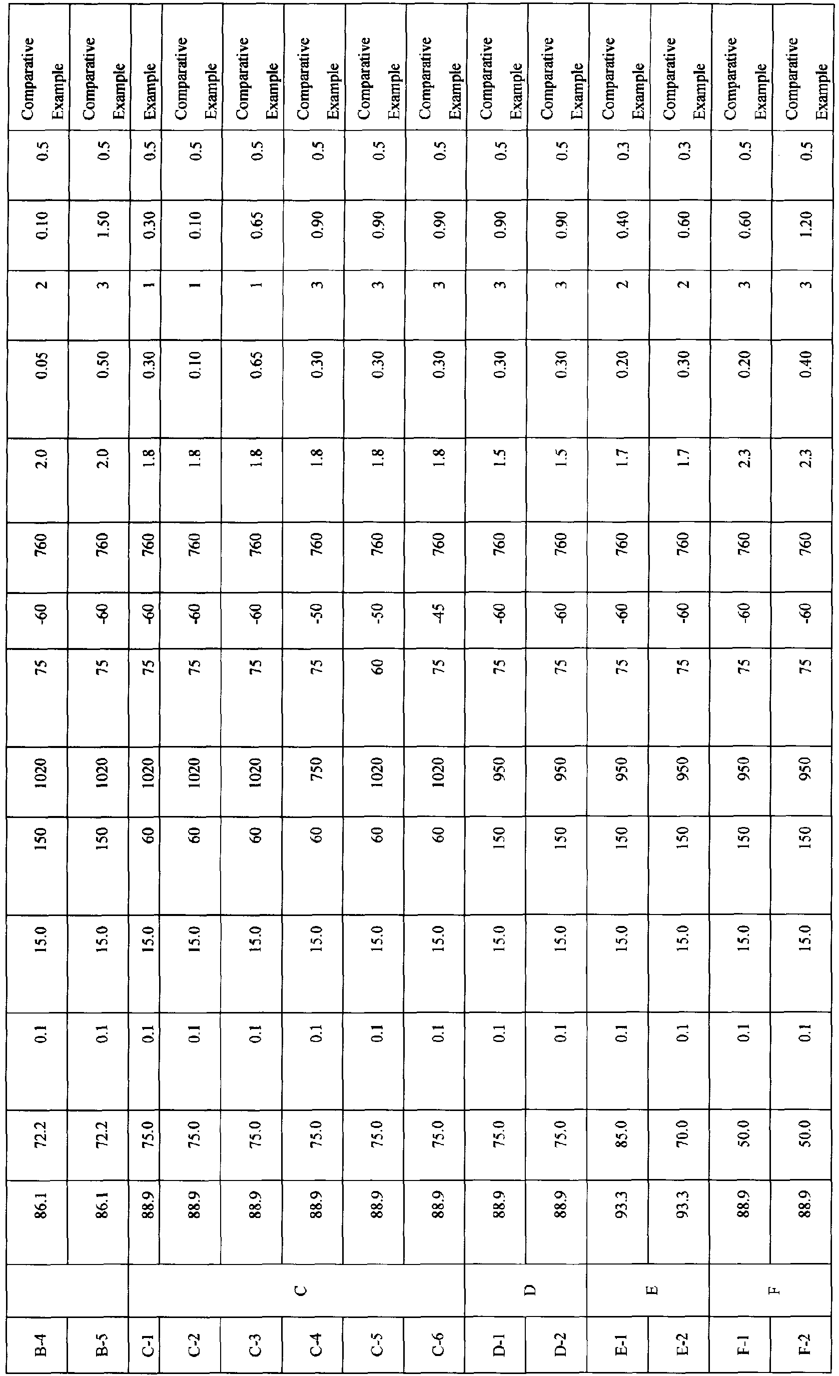

Using each test piece shown in Table 2, measurements about cleanability, antiglare properties and hydrophilicity were carried out. More particularly, the measurement of arithmetic average roughness on a steel sheet surface, the transfer rate measurement, the measurement of micropits on a steel sheet surface, the measurement of surface glossiness, the surface film measurement, the measurement of wettability, and the evaluation of cleanability were carried out.

It should be noted that similarly the cleanability of an electroless Ni plating material, which is mostly used for HDD parts, was also measured as a control material for evaluating cleanability as shown in Table 2.

In the measurement of arithmetic average roughness on a steel sheet surface, a 50 mm square sample cut from each test piece was subjected to ultrasonic cleaning using acetone, and the arithmetic average roughness Ra was then measured in a method in accordance with JIS B 0601. It should be noted that this arithmetic average roughness was measured three times in the direction perpendicular to the rolling direction and the average value was calculated and evaluated.

In the transfer rate measurement, a 50 mm square sample cut from each test piece was subjected to ultrasonic cleaning using acetone, and a steel sheet surface was then observed by an optical microscope to calculate the transfer rate, which is the area rate of a crater portion to which a dull pattern is transferred. It should be noted that a steel sheet surface was observed with a magnification of 400, and the number of observed visual fields was 20, and the average value of all the measurement values was calculated and evaluated.

In the measurement of micropits, a 50 mm square sample cut from each test piece was subjected to ultrasonic cleaning using acetone, and a steel sheet surface was then observed by a laser microscope to calculate the existing density and open area ratio of micropits with a depth of 0.5 µm or more and an open area of 10 µm² or more. It should be noted that a steel sheet surface was observed with a magnification of 1000, and the number of visual fields was 10, and the total area of measurement regions was 0.1 mm².

In the measurement of surface glossiness, a 50 mm square sample cut from each test piece was subjected to ultrasonic cleaning using acetone, and the surface glossiness (20°) was then measured in a method in accordance with JIS Z 8741. It should be noted that the surface glossiness was measured three times in each direction, the direction parallel to the rolling direction and the direction perpendicular to the rolling direction, to calculate the average value, and a sample with 400 or less was evaluated as one with low surface glossiness and excellent antiglare properties.

In the surface film measurement, the proportion of Si element was obtained from the integrated intensity of each element peak on the outermost surface of an oxidized film in each sample by X-ray photoelectron spectroscopy.

In the measurement of wettability, a 50 mm square sample cut from each test piece was subjected to ultrasonic cleaning using acetone, and the contact angle of a 0.1 ml droplet of ion exchanged water was then measured by a sessile drop method. A sample with a contact angle of 50° or less was evaluated as one with excellent wettability.

In the evaluation of cleanability, a 50 mm square sample cut from each test piece was subjected to a cleaning operation in the following procedure to obtain a specimen for measuring surface cleanliness. It should be noted that the processes after acetone degreasing, which is a cleaning operation, and all the processes for measuring surface cleanliness were carried out under clean circumstances of Class 5 prescribed in JIS B 9920.

In the cleaning operation of samples, first, degreasing is carried out by ultrasonic cleaning using acetone. This degreased sample was subjected to ultrasonic cleaning using a fluorine-based cleaning liquid, vapor cleaning and vacuum drying. After that, the sample was subjected to ultrasonic cleaning using a weak alkaline detergent, rinsed by immersion in ultrapure water, pulled up at a low speed and dried with warm air to obtain a specimen for measuring surface cleanliness.

The surface cleanliness was measured using an LPC (Liquid Particle Counter) device as follows.

First, in order to immerse a specimen for measuring cleanliness, ultrapure water was put into a beaker, which was set to the LPC device, and the number of particles existing in the ultrapure water and the particle size distribution were measured. From the measurement data of this ultrapure water, the number of particles with a particle diameter of 0.3 µm or more was calculated, and this calculated value was used as the number of particles before the specimen was immersed (a blank measurement value).

Next, a specimen for measuring cleanliness was immersed in the beaker of ultrapure water and was subjected to ultrasonic cleaning for a fixed time to extract particles attached to the specimen surface into ultrapure water. After that, the number of particles existing in this ultrapure water and the particle size distribution were measured by the LPC device to calculate the number of particles with a particle diameter of 0.3 µm or more.

Then, the difference between this calculated value and the blank measurement value was used as the number of particles extracted from a specimen for measuring cleanliness. It should be noted that the number of particles and the particle size distribution were measured three times or more using the same solution by the LPC device, and the average value was used as a measurement value. In addition, using 3 samples of the same type of specimen, measurement was carried out at the number of tests n = 3, and the average value was used as the number of particles attached to and remaining in a specimen for measuring cleanliness. Furthermore, the number of attached particles (the number of particles attached to the surface) per unit area on a steel sheet surface was calculated from the value of particles. Then, when the number of attached particles was 1000/cm² or less, cleanability was evaluated as good.

The measurement results about the cleanability, antiglare properties and hydrophilicity are shown in Table 3.

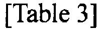

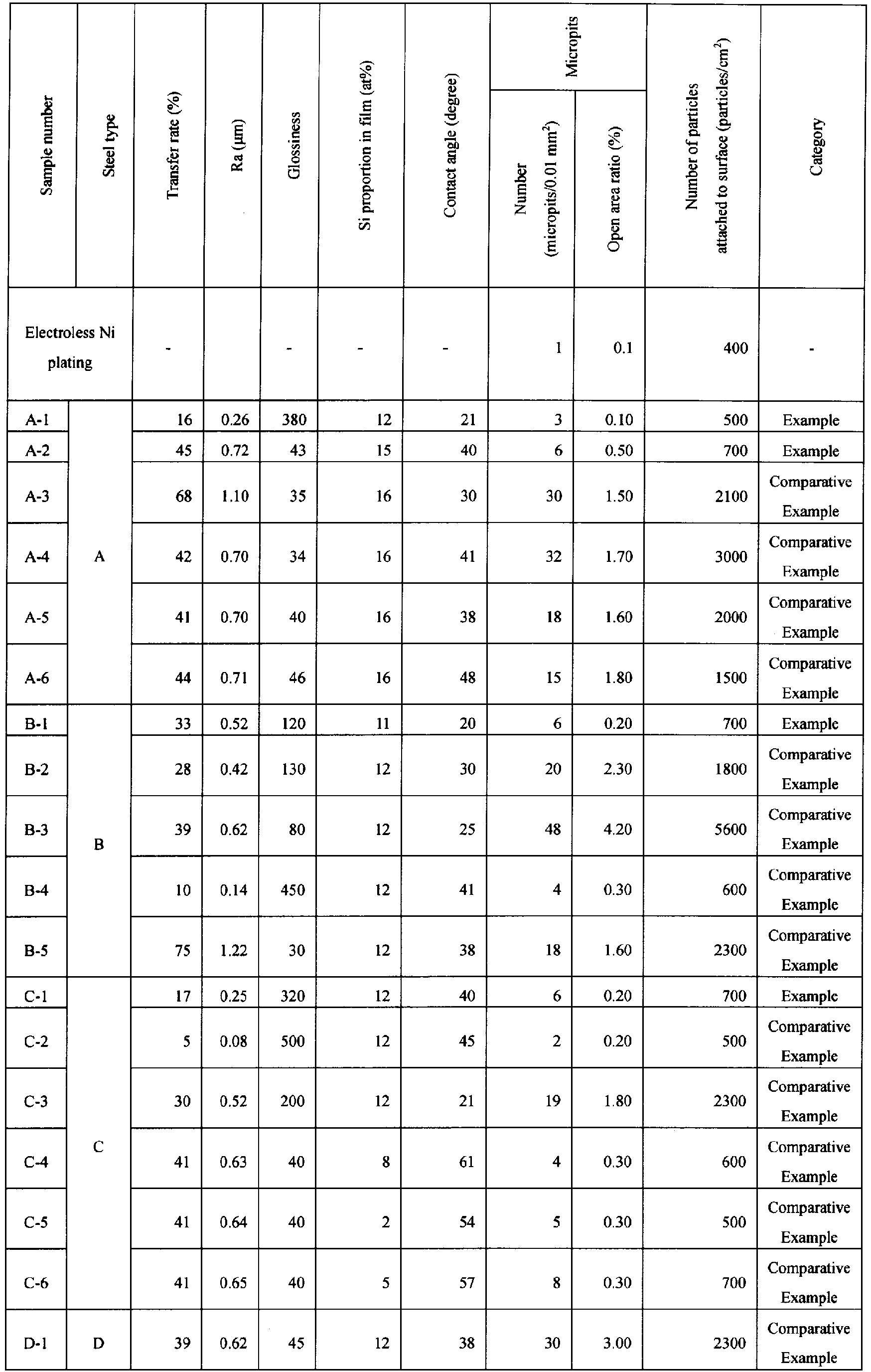

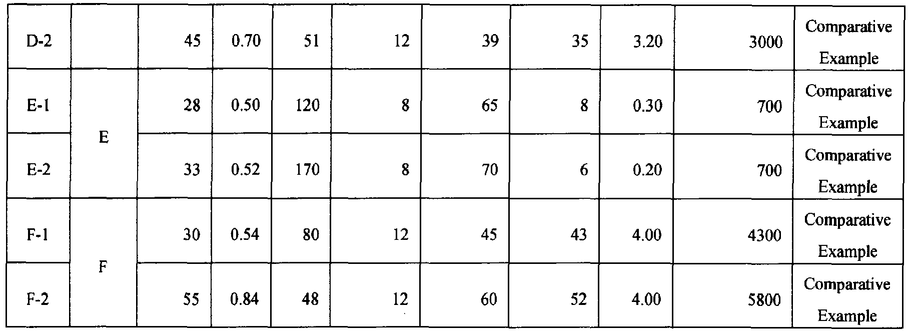

As shown in Table 3, in all Examples, the existing density of micropits was 10.0 or less per 0.01 mm² and the open area ratio of micropits was 1.0% or less. In addition, a stainless steel sheet, in which the arithmetic average roughness in the direction perpendicular to the rolling direction on a steel sheet surface was 0.2 to 1.2 µm and the dull pattern transfer rate is 15 to 70%, was obtained.

In addition, in all the stainless steel sheets in Examples, the number of attached particles in a specimen for measuring surface cleanliness was 1000 particles/cm² or less, which was equally low compared to that of an electroless Ni plating material, a control material for evaluating cleanability.

Furthermore, all the stainless steel sheets in Examples had surface glossiness lower than the standard, which means good antiglare properties, and furthermore had a contact angle smaller than the standard, which means good hydrophilicity.

Therefore, it can be evaluated that all Examples have a surface state with cleanability, antiglare properties and hydrophilicity appropriate as, for e.g. a cover member of HDDs, even on an unprocessed stainless steel sheet surface.

### [Example 2]

On the surface of some samples made in Example 1, a gasket was injection-molded, and the adhesion of an adhesive between the stainless steel and the gasket was evaluated.

When injection molding a gasket, a modified olefin resin adhesive was first applied to a sample surface in advance.

In addition, a gasket was injection-molded using a styrene thermoplastic elastomer compound at injection speed of 0.3 mm/sec, an injection pressure of 30 MPa and a cycle time of 30 seconds by an injection molding machine to adhere to the sample surface.

Then, a test for adhesive properties was carried out as follows.

In the test for adhesive properties, penetration peeling with about 1 mm was formed on the adhesive surface of gasket formed on a sample, and an SUS wire was allowed to pass through a part in which this penetration peeling was formed. A vertical tensile load was applied thereto and when peeled length was expanded to about 10 mm, its load was measured.

When this measured peeling load was 100 kPa or more, adhesive properties were evaluated as good, and when the peeling load was less than 100 kPa, adhesive properties were evaluated as poor. The samples, the adhesive properties of which were evaluated, and the results are shown in Table 4.

**[Table 4]**

| Sample Number | Steel Type | Adhesion of Adhesive | Category |
|---|---|---|---|
| A-1 | A | Good | Example |
| B-1 | B | Good | Example |
| C-1 | C | Good | Example |
| C-5 | | Poor | Comparative Example |
| C-6 | | Poor | Comparative Example |
| E-2 | E | Poor | Comparative Example |

Examples A-1, B-1 and C-1, which had good cleanability, antiglare properties and wettability in Example 1, all had good adhesive properties.

On the other hand, Comparative Examples C-5, C-6 and E-2, which had poor wettability in Example 1, all had poor adhesive properties.

From the above, it can be evaluated that the ferritic stainless steel sheet according to the present invention has a surface state with cleanability, antiglare properties and hydrophilicity appropriate as a cover member of HDDs.

### INDUSTRIAL APPLICABILITY

The present invention can be used when producing parts for precision instruments and electronic equipment and the like, for e.g. a cover member of hard disk drives (HDDs).

## Claims

1. A ferritic stainless steel sheet, which is temper-rolled using a dull roll after finishing cold rolling and bright annealing, wherein
the arithmetic average roughness Ra in the direction perpendicular to the rolling direction on the steel sheet surface is 0.2 µm or more and 1.2 µm or less,
the transfer rate, which is the area rate of a part to which a dull pattern is transferred on the steel sheet surface, is 15% or more and 70% or less,
micropits with a depth of 0.5 µm or more and an open area of 10 µm² or more which are formed on the steel sheet surface have an existing density of 10.0 or less per 0.01 mm² on the steel sheet surface and an open area ratio of 1.0% or less on the steel sheet surface, and
a film formed on the steel sheet surface is constituted from an oxide containing SiO₂ as a main constituent, which oxide contains at least Si, N, Al, Mn, Cr, Fe, Nb, Ti and O as film-forming elements other than C, wherein the Si content is 10 at% or more, and the N content is 10 at% or less.

2. The ferritic stainless steel sheet according to claim 1, containing C: 0.15 mass% or less, Si: 0.1 mass% or more and 2.0 mass% or less, Cr: 10.0 mass% or more and 32.0 mass% or less, and at least one of Nb: 0.01 mass% or more and 0.8 mass% or less and Ti: 0.01 mass% or more and 0.5 mass% or less, and the rest including Fe and inevitable impurities.

3. The ferritic stainless steel sheet according to claim 2, containing at least one of Mo: 0.2 mass% or more and 5.0 mass% or less and Cu: 0.1 mass% or more and 3.0 mass% or less.

4. The ferritic stainless steel according to claim 1, containing C: 0.15 mass% or less, Si: 0.1 mass% or more and 2.0 mass% or less, Mn: 2.0 mass% or less, P: 0.04 mass% or less, S: 0.03 mass% or less, Ni: 0.6 mass% or less, Cr: 11.0 mass% or more and 32.0 mass% or less, Mo: 0 mass% or more and 3.0 mass% or less, Cu: 0 mass% or more and 1.0 mass% or less, Nb: 0 mass or more and 1.0 mass% or less, Ti: 0 mass% or more and 1.0 mass% or less, Al: 0 mass% or more and 0.12 mass% or less, N: 0.025 mass% or less and B: 0 mass% or more and 0.01 mass% or less, and the rest including Fe and inevitable impurities.

5. A cover member of hard disk drives,
the cover member being formed from a ferritic stainless steel sheet according to any one of claims 1 to 4.

6. A production method for a ferritic stainless steel sheet, in which a hot rolled steel sheet after hot rolling is subjected to at least finishing cold rolling, followed by bright annealing as finishing annealing, and is temper-rolled using a dull roll, wherein
rolling is carried out at a cold rolling reduction of 30% or more in finishing cold rolling, and a rolling reduction of 15% or more and a rolling speed of 200 mm/min or less using a work roll with an arithmetic average roughness Ra of 0.3 µm or less at least in the final rolling pass, and
the total cold rolling reduction until bright annealing is 70% or more.

7. The production method for a ferritic stainless steel sheet according to claim 6, wherein,
in finishing annealing, bright annealing is carried out in a hydrogen-nitrogen mixed gas atmosphere with a hydrogen ratio of 70 vol% or more under the condition that the dew point is -70°C or higher and -50°C or lower and the temperature is 800°C or higher and 1100°C or lower.

8. The production method for a ferritic stainless steel sheet according to claim 6 or 7, wherein
in temper rolling, rolling is carried out in a single pass or more using a dull roll with a roll diameter of 500 mm or more and an arithmetic average roughness Ra of 1.0 µm or more and 3.5 µm or less at an elongation rate in a single pass of 0.5% or less, and the total elongation rate is 0.2% or more and 1.4% or less.
